# EUROPÄISCHE PATENTANMELDUNG

(11) **EP 4 711 724 A1**
(43) Veröffentlichungstag der Anmeldung: **18.03.2026**
(21) Anmeldenummer: 25202719.8
(22) Anmeldetag: 17.09.2025
(51) Int. Cl.: G01D 11/24, H05K 5/13

(54) **SENSORGEHÄUSE FÜR EINEN SENSOR**

(30) Priorität: 17.09.2024 DE 102024126712
(71) Anmelder: Pepperl+Fuchs SE, 68307 Mannheim (DE)
(72) Erfinder: Zeilfelder, Alexander, 68307 Mannheim (DE)
(74) Vertreter: Tergau & Walkenhorst Intellectual Property GmbH

(57) **Zusammenfassung**

Sensorgehäuse (1) für einen Sensor, insbesondere einen optischen Sensor, umfassend wenigstens

a. ein erstes Gehäuseteil (11), das als eine Aufnahme für Sensorik - und / oder Elektronik - komponenten ausgebildet ist und ein weiteres Gehäuseteil (12), das dazu ausgebildet ist, das erste Gehäuseteil abzudecken;

b. wobei das erste Gehäuseteil mit dem weiteren Gehäuseteil in einem Zustand, in dem das weitere Gehäuseteil das erste Gehäuseteil abdeckt, mittels wenigstens einer ersten Gehäuseverbindungsschraube (2) an wenigstens einer ersten Schraubverbindungsstelle (21) miteinander verschraubbar ist,

c. wobei das erste Gehäuseteil an der wenigstens einen ersten Schraubverbindungsstelle eine erste Montagebohrung (4) aufweist, entlang welcher die wenigstens eine erste Gehäuseverbindungsschraube durch das erste Gehäuseteil geführt und in das weitere Gehäuseteil mit ihrem Gewinde einschraubbar ist,

d. wobei das erste Gehäuseteil an der wenigstens einen ersten Schraubverbindungsstelle eine Befestigungsmontagebohrung (5) aufweist, um mit einer ersten Montageschraube (30) das Sensorgehäuse mit einer Anlagefläche (10) an einer Befestigungsfläche (101) eines vorbestimmten Befestigungsortes zu befestigen, wobei die erste Montagebohrung und die Befestigungsmontagebohrung entlang einer gemeinsamen Längsachse (A) angeordnet sind und wobei die Befestigungsmontagebohrung einen Durchmesser aufweist, der größer ist als der Durchmesser der ersten Montagebohrung.

## Beschreibung

### Technisches Gebiet

Die vorliegende Erfindung betrifft ein Sensorgehäuse für einen Sensor, insbesondere einen optischen Sensor, einen Sensor, ein Verfahren zum Herstellen eines Sensors, ein Montageverfahren zum Montieren eines Sensorgehäuses für einen Sensor und ein Positioniergerät und ein optisches Sensorgerät.

### Hintergrund

Im Stand der Technik sind auf dem technischen Gebiet der Sensorgehäuse, insbesondere für optische Sensoren, verschiedene Sensorgehäuse bekannt, die aus mehreren Gehäuseteilen bestehen und zur Aufnahme von Sensorik- und Elektronik-komponenten dienen. Diese Sensorgehäuse dienen dabei vor allem dem Schutz und der sicheren Befestigung der Sensorik- und Elektronikkomponenten. Derartige Sensoren mit deren Sensorgehäusen werden in verschiedenen Anwendungen, wie z.B. in der Automobilindustrie, der industriellen Automatisierung oder der Gebäudeüberwachung, eingesetzt.

Das Sensorgehäuse muss dabei nicht nur mechanischen Schutz bieten, sondern auch eine einfache Montage und Wartung der darin enthaltenen Komponenten ermöglichen. Gleichzeitig besteht ein steter Bedarf, die Sensoren und deren Gehäuse möglichst platzsparend und klein zu fertigen.

Die Sensorgehäuse sind im Stand der Technik häufig mehrteilig gestaltet, so dass sich einzelne Gehäuseteile durch Schrauben, Schnappverbindungen oder Klemmmechanismen miteinander verbinden lassen.

DE202014103640U1 beispielsweise offenbart einen elastischen Schraubdom zum Befestigen eines Bauteils.

Ein bekanntes Problem bei den herkömmlichen Sensorgehäusen ist jedoch die unzureichende Stabilität und Präzision der Verbindung der Gehäuseteile. Dies kann beim Zusammenbau zu einer fehlerhaften Ausrichtung der Sensorik- und Elektronikkomponenten oder zu einer Undichte des Sensorgehäuses führen, was die Funktionalität des Sensors beeinträchtigen kann.

Bei herkömmlichen Sensorgehäusen besteht zudem ein häufiges Problem darin, dass die Befestigung des gesamten Sensorgehäuses an einem dafür vorbestimmten Befestigungsort oft schwierig ist und zu einem erhöhten Montageaufwand und einer höheren Fehleranfälligkeit führt. Dies kann zu einer fehlerhaften Positionierung der Sensorik- und Elektronikkomponenten führen, was die Funktionalität des Sensors beeinträchtigen kann. Zudem kann eine unzureichende Stabilität der Verbindung des Sensorgehäuses mit dem Befestigungsort zu Vibrationen und mechanischen Belastungen führen, die die Lebensdauer und Zuverlässigkeit des Sensors verringern.

### Zusammenfassende Beschreibung der Erfindung

Es ist deshalb eine der vorliegenden Erfindung zu Grunde liegende Aufgabe, die Nachteile von Sensorgehäusen im Stand der Technik zu überwinden. Insbesondere ist es eine der vorliegenden Erfindung zu Grunde liegende Aufgabe, Sensoren mit Sensorgehäusen bereitzustellen, die eine einfachere und zuverlässigere Befestigung des gesamten Sensorgehäuses an einem vorbestimmten Befestigungsort ermöglichen. Darüber hinaus ist es eine weitere der Erfindung zu Grunde liegende Aufgabe Sensoren mit Sensorgehäusen bereitzustellen, die über eine verbesserte Stabilität und Präzision der Verbindung der Gehäuseteile verfügen, die Dichtigkeit des Gehäuses besser sicherstellen und/oder den Montageaufwand reduzieren bzw. die Fehleranfälligkeit minimieren.

Diese und andere Probleme werden durch den Gegenstand der beigefügten unabhängigen Ansprüche gelöst.

Die Ausführungsformen, Merkmale und Kombinationen von Merkmalen, wie sie hier in Verbindung mit der Erfindung beschrieben werden, sowie die Kombination von Merkmalen, wie sie in den beigefügten Ansprüchen angegeben sind, aber auch jede Kombination von Merkmalen, wie sie in Verbindung mit den Ausführungsformen erwähnt und beschrieben wird, gelten als hierin offenbart, zumindest jedoch als durch einen Fachmann herleitbar. Insbesondere kann jedes Merkmal und jede Kombination von Merkmalen in den hier beschriebenen Ausführungsformen beispielsweise in einer anderen Kombination, insbesondere in einer anderen Anspruchskategorie, beansprucht werden, mindestens weil die fachkundige Person erkennen wird, dass jede einzelne Kombination der hier genannten Merkmale geeignet ist, zur Lösung des zugrunde liegenden Problems beizutragen.

Des Weiteren können jedes Merkmal und jede Kombination von Merkmalen in den Ansprüchen und in der untenstehenden Beschreibung unabhängig von dem jeweils beanspruchten Gegenstand, unabhängig von Anspruchsabhängigkeiten und Rückverweisen sowie unabhängig von der Anspruchskategorie, in der das Merkmal beansprucht wird, verwendet und separat beansprucht werden. Beispielsweise kann in einer willkürlichen Kombination, die aus einem oder mehreren Ansprüchen ausgewählt ist, eine oder mehrere Ausführungsformen gemäß der untenstehenden Beschreibung und/oder den beigefügten Abbildungen vorgesehen sein.

Bevorzugte Ausführungsformen können den abhängigen Ansprüchen entnommen werden und darüber hinaus aus der folgenden Beschreibung, insbesondere unter Berücksichtigung verschiedener Ausführungsformen, wie sie in den beigefügten Ansprüchen behandelt und beschrieben sind.

Die oben beschriebenen Aufgaben werden erfindungsgemäß gelöst durch ein Sensorgehäuse für einen Sensor, insbesondere einen optischen Sensor, nach der vorliegenden Erfindung.

Ein solches Sensorgehäuse umfasst wenigstens ein erstes Gehäuseteil, das als eine Aufnahme für Sensorik- und/oder Elektronik-komponenten ausgebildet ist und ein weiteres Gehäuseteil, das dazu ausgebildet ist, das erste Gehäuseteil abzudecken. Mit anderen Worten ist das Sensorgehäuse der erfindungsgemäßen Art wenigstens zweiteilig aufgebaut. In einem erfindungsgemäßen Sensor können in dem Sensorgehäuse verschiedene Sensorik- und/oder Elektronik-komponenten vorgesehen sein. Beispielsweise kann der Sensor ein optischer Sensor, insbesondere eine Kamera sein. Bei einem solchen Sensor kann die Aufnahme bspw. einen Objekthalter für ein Objektiv eines optischen Sensors umfassen. Im Rahmen der vorliegenden Erfindung soll verstanden werden, dass das wenigstens ein erste Gehäuseteil als eine Aufnahme für Sensorik- und/oder Elektronik-komponenten ausgebildet ist und bevorzugt das weitere Gehäuseteil als eine Art Deckel ausgebildet ist. Dies schließt jedoch nicht aus, dass auch das weitere Gehäuseteil für die Aufnahme von Sensorik- und/oder Elektronik-komponenten ausgebildet ist. Mit anderen Worten kann neben dem ersten Gehäuseteil auch ein weiteres Gehäuseteil als Aufnahme für Sensorik- und/oder Elektronik-komponenten ausgebildet sein. Beispielsweise kann ein Teil der Verkabelung, Platinen oder ähnliches auch an dem weiteren Gehäuseteil, also insbesondere einem Deckel, angebracht werden. Besonders vorteilhaft kann der weitere Gehäuseteil, bevorzugt dem Deckel, beispielsweise Komponenten angebracht sein, die in einer für den bestimmungsgemäßen Gebrauch vorgesehenen Orientierung einem Benutzer zugewandt sind, bspw. Anzeigeelemente oder Bedienelemente, wie bspw. Tasten.

Der Begriff "abdecken", wie hierin verwendet, bezeichnet bevorzugt das vollständige oder teilweise Überdecken des ersten Gehäuseteils mit einem weiteren Gehäuseteil. Dies kann beispielsweise durch das eine weitere Gehäuseteil erfolgen, insbesondere in Form einer Abdeckung, so dass die im Inneren des Sensorgehäuses angebrachten Sensorik- und/oder Elektronik-komponenten vor äußeren Einflüssen geschützt werden.

Im Rahmen der vorliegenden Erfindung meint der Begriff "abdecken" bevorzugt zudem, dass das eine weitere Gehäuseteil und das erste Gehäuseteil einen Innenraum bilden, der für die Sensorik- und/oder Elektronik-komponenten vorgesehen ist, und dabei das eine weitere Gehäuseteil das erste Gehäuseteil wenigstens abschnittsweise, bevorzugt vollständig, abdeckt, und weiter bevorzugt formschlüssig einen Innenraum des Sensorgehäuses bildet.

Bei dem erfindungsgemäßen Sensorgehäuse ist das erste Gehäuseteil mit dem weiteren Gehäuseteil in einem Zustand, in dem das weitere Gehäuseteil das erste Gehäuseteil abdeckt, mittels wenigstens einer ersten Gehäuseverbindungsschraube an wenigstens einer ersten Schraubverbindungsstelle miteinander verschraubbar. Durch die Verwendung wenigstens einer ersten Gehäuseverbindungsschraube an wenigstens einer ersten definierten Schraubverbindungsstelle wird eine stabile und dauerhafte Verbindung der Gehäuseteile gewährleistet. Dies trägt zur Langlebigkeit und Zuverlässigkeit des Sensorgehäuses bei und erleichtert zudem eventuelle Wartungsarbeiten oder den Austausch von Komponenten. Durch eine derartige Verschraubung werden die Gehäuseteile kraftschlüssig miteinander verbunden. Hierzu verbindet die Gehäuseverbindungsschraube kraftschlüssig die beiden jeweiligen Gehäuseteile. Hierzu kann an der Schraubverbindungsstelle eine Gewindebohrung vorgesehen sein in die die ersten Gehäuseverbindungsschraube als metrische Schraube mit ihrem Gewinde eingeschraubt wird oder die Gehäuseverbindungsschraube kann als eine selbstschneidende Schraube vorgesehen sein.

Es soll verstanden werden, dass zur erfindungsgemäßen Verschrauben des ersten Gehäuseteils mit dem weiteren Gehäuseteil des Sensorgehäuses eine einzelne Gehäuseverbindungsschraube ausreichend sein kann. Es ist jedoch auch ein Ausführungsform der vorliegenden Erfindung, dass mehr als eine, insbesondere zwei, drei oder vier, Gehäuseverbindungsschrauben verwendet werden können, um das erste Gehäuseteil mit dem weiteren Gehäuseteil zu verschrauben. Entsprechend ist es ebenfalls im Rahmen der Erfindung, dass für weitere Gehäuseverbindungsschrauben jeweils eine weitere Schraubverbindungsstelle vorgesehen ist. In einer bevorzugten Ausführungsform der vorliegenden Erfindung sind zwei Schraubverbindungsstellen vorgesehen, die bevorzugt derart angeordnet sind, dass sie auf zwei jeweils gegenüberliegenden Seiten der Aufnahme für Sensorik- und/oder Elektronik-komponenten, bzw. eines Innenraums, des Sensorgehäuses angeordnet sind, bevorzugt "über Kreuz" mit weiteren Elementen, beispielsweise mit zwei ebenfalls "über Kreuz" angeordneten Domen.

In der vorliegenden Erfindung weist das erste Gehäuseteil an der wenigstens einen ersten Schraubverbindungsstelle eine erste Montagebohrung auf, entlang welcher die wenigstens eine erste Gehäuseverbindungsschraube durch das erste Gehäuseteil geführt und in das weitere Gehäuseteil mit ihrem Gewinde einschraubbar ist. Dies ist insbesondere vorteilhaft, da die erste Montagebohrung eine präzise Führung der Gehäuseverbindungsschraube ermöglicht. Dadurch wird sichergestellt, dass die Schraube exakt durch das erste Gehäuseteil geführt und an der Schraubverbindungsstelle in das weitere Gehäuseteil eingeschraubt wird. Dies verbessert die Stabilität und Festigkeit der Verbindung zwischen den Gehäuseteilen, was wiederum die Zuverlässigkeit und Langlebigkeit des gesamten Sensorgehäuses erhöht. Zudem erleichtert die klare Führung der Schraube den Montageprozess, da die Schraube ohne zusätzliche Justierung direkt in die vorgesehene Position gebracht werden kann.

Das erste Gehäuseteil weist zudem an der wenigstens einen ersten Schraubverbindungsstelle eine Befestigungsmontagebohrung auf, um mit einer ersten Montageschraube das Sensorgehäuse, insbesondere das erste Gehäuseteil mit einer Anlagefläche an einer Befestigungsfläche eines vorbestimmten Befestigungsortes zu befestigen, wobei die erste Montagebohrung und die Befestigungsmontagebohrung entlang einer gemeinsamen Längsachse angeordnet sind und wobei die Befestigungsmontagebohrung einen Durchmesser aufweist, der größer ist als der Durchmesser der ersten Montagebohrung.

Dies ist insbesondere vorteilhaft, da die Anordnung der ersten Montagebohrung und der Befestigungsmontagebohrung entlang einer gemeinsamen Längsachse eine präzise und stabile Befestigung des Sensorgehäuses ermöglicht.

Der größere Durchmesser der Befestigungsmontagebohrung im Vergleich zur ersten Montagebohrung erleichtert das Einführen und Positionieren der Montageschraube, was den Montageprozess vereinfacht und beschleunigt. Zudem sorgt diese Anordnung für eine gleichmäßige Verteilung der Kräfte entlang der Längsachse, was die strukturelle Integrität und die Haltbarkeit des Sensorgehäuses erhöht.

Es soll verstanden werden, dass in Bezug auf einen zum bestimmungsgemäßen Gebrauch angeordneten Sensor die Montagebohrung und die Befestigungsmontagebohrung bevorzugt an einer dem Betrachter abgewandten Seite des Gehäuses angeordnet sind. Bevorzugt ist dies die der Anbringfläche zugewandte Seite.

Die Montagebohrungen dient zum Einfügen der Gehäuseverbindungsschraube und somit zum Verschrauben des ersten Gehäuseteils und des weiteren Gehäuseteils, bevorzugt von hinten. Gleichzeitig ist an der wenigstens einen ersten Schraubverbindungsstelle die Befestigungsmontagebohrung so angeordnet, dass mittels der ersten Montageschraube das Sensorgehäuse an einer Befestigungsfläche eines vorbestimmten Befestigungsortes befestigt werden kann und dabei die Befestigungsmontageschraube bevorzugt ebenfalls von hinten in die die Befestigungsmontagebohrung eingeschraubt wird, welche dann entlang einer gemeinsamen Längsachse mit der Gehäuseverbindungsschraube angeordnet ist. Mit anderen Worten wird die Montagebohrung zunächst genutzt um die Gehäusehälften zu verbinden und sodann die Befestigungsmontagebohrung, um das Sensorgehäuse an seinem vorbestimmten Befestigungsort anzuschrauben. Durch den Durchmesser der Befestigungsmontagebohrung, der größer ist als der Durchmesser der ersten Montagebohrung kann insbesondere ein Kopf der Gehäuseverbindungsschraube in der Befestigungsmontagebohrung mit größerem Durchmesser eingedreht werden und somit vollständig in der Befestigungsmontagebohrung versenkt werden. Hierdurch kann die Montageschraube in die Befestigungsmontagebohrung und somit hinter die Gehäuseverbindungsschraube eingedreht werden. Dies ermöglicht eine präzise und stabile Befestigung des Sensorgehäuses, wodurch insbesondere die Gehäuseverbindungsschraube nicht sichtbar und durch die Montageschraube zudem geschützt in der Montagebohrung und der Befestigungsmontagebohrung angeordnet sind. Durch das Einbringen der Schrauben, die zunächst die Anbringfläche durchdringen, wird eine feste Verbindung geschaffen. Erfindungsgemäß ist ebenfalls, ein Innengewinde in die Montagebohrung zu integrieren, bevorzugt ein metrisches Gewinde wie M4. Dies erleichtert den Montageprozess zusätzlich und sorgt für eine sichere Verschraubung.

Das erfindungsgemäße Sensorgehäuse und der erfindungsgemäße Sensor bieten damit eine besonders vorteilhafte Konstruktion und erlauben durch die präzise Anordnung der Montage- und Befestigungselemente eine erhöhte Stabilität und Zuverlässigkeit des erfindungsgemäßen Sensors. Die dadurch erreichte formschlüssige Verbindung der Gehäuseteile trägt zusätzlich zur Langlebigkeit und Robustheit des Sensors bei.

Die oben beschriebenen Aufgaben werden dabei ebenfalls erfindungsgemäß gelöst durch einen Sensor, insbesondere einen optischen Sensor oder Positioniersensor, mit einem Sensorgehäuse nach der vorliegenden Erfindung.

Durch die vorliegende Erfindung wird insbesondere durch das Bereitstellen der Befestigungsmontagebohrung, wobei die erste Montagebohrung und die Befestigungsmontagebohrung entlang einer gemeinsamen Längsachse angeordnet sind und wobei die Befestigungsmontagebohrung einen Durchmesser aufweist, der größer ist als der Durchmesser der ersten Montagebohrung erreicht, dass mit der ersten Montageschraube das Sensorgehäuse, insbesondere das erste Gehäuseteil, mit seiner Anlagefläche besonders einfach an einer Befestigungsfläche eines vorbestimmten Befestigungsortes zu befestigt werden kann und dabei die Gehäuseverbindungsschraube zum einen verdeckt wird. Hierdurch wird auch eine Reduktion der Anzahl an Bohrungen im Sensorgehäuse erreicht, was sowohl optisch als auch mit Hinblick auf Stabilität und Fertigungsverfahren vorteilhaft ist.

Durch das Bereitstellen der Befestigungsmontagebohrung entlang der gemeinsamen Längsachse der Montagebohrungen wird der Montageprozess vereinfacht und die Befestigung des Sensors an einer vorbestimmten Befestigungsfläche erleichtert. Dies führt zu einer verbesserten Funktionalität und einer höheren Präzision bei der Positionierung des Sensors und schließlich zu einer präziseren Erfassung von Messdaten.

Die oben beschriebenen Aufgaben werden insbesondere ebenfalls erfindungsgemäß gelöst durch ein Positioniergerät und/oder optisches Sensorgerät, das ein erfindungsgemäßes Sensorgehäuse und/oder einen erfindungsgemäßen Sensor aufweist.

Die vorliegende Erfindung ist dabei in vielen Applikationsbereichen einsetzbar. Insbesondere ist hierbei in der Realisierung der erfindungsgemäßen Lehre an ein Positioniergerät und/oder einen optischen Sensor gedacht. Die Erfindung soll jedoch darauf nicht eingeschränkt sein.

Insbesondere kann ein erfindungsgemäßes Positioniergerät und/oder ein erfindungsgemäßer optischer Sensor ausgewählt sein aus der Gruppe umfassend Barcodelesegerät, Positioniergerät für fahrerloses Transportsysteme, sogenannte automated guided vehicles oder AGV, Codebandsensor, Schienenpositionergerät, Lochfinder bzw. sogenannte Position Hole alignment oder PHA. Weiterhin kann die Erfindung bei Lochfindern, bei denen einen Positionierung über ein Lochbild realisiert wird vorteilhaft eingesetzt werden. Zudem kann ein erfindungsgemäßes Positioniergerät und/oder ein erfindungsgemäßer optischer Sensor in einem sogenannten CleverReader eingesetzt werden.

Ein CleverReader ist bevorzugt verstanden als ein Gerät oder eine Software, die Barcodes und andere optische Codes lesen und interpretieren kann. Diese Geräte werden häufig in der Logistik, im Einzelhandel und in der industriellen Automatisierung eingesetzt, um den Prozess der Datenerfassung zu beschleunigen und zu vereinfachen. CleverReader können ggf. dazu eingerichtet sein verschiedene Arten von Codes zu lesen, einschließlich 1D- und 2D-Barcodes, und können zusätzliche Funktionen wie die Fähigkeit, beschädigte oder schlecht gedruckte Codes zu erkennen und zu dekodieren umfassen.

Das erfindungsgemäße Positioniergerät und/oder ein erfindungsgemäßer optischer Sensor kann zudem als Time-of-Flight Sensor, Stereo-Sensor, Eventkamera, Positioniergerät und/oder Positioniergerät und/oder optisches Sensorgerät zur Merkmalsanalyse und/oder Bildauswertung, Laserlichtschnittsensor, Positioniergerät und/oder optisches Sensorgerät zur Positionierung und Führung von Objekten, Positioniergerät und/oder optisches Sensorgerät zur Detektion und Abgleich von Merkmalen, Positioniergerät und/oder Positioniergerät und/oder optisches Sensorgerät zur optischen Vermessung, Positioniergerät und/oder Positioniergerät und/oder optisches Sensorgerät zur Texterkennung (OCR) und Positioniergerät und/oder Positioniergerät und/oder optisches Sensorgerät zum Lesen von 1-D- und 2-D-Codes weitergebildet sein.

Die oben beschriebenen Aufgaben werden ebenfalls erfindungsgemäß gelöst durch ein erfindungsgemäßes Verfahren zum Herstellen eines Sensors, umfassend wenigstens die folgenden Schritte:
Einen Schritt des Bereitstellens eines ersten Gehäuseteils und eines weiteren Gehäuseteils eines Sensorgehäuses nach der vorliegenden Erfindung;
Einen Schritt des Anordnens von Sensorik- und/oder Elektronik-komponenten innerhalb des ersten Gehäuseteils und/oder des weiteren Gehäuseteils;
Einen Schritt des Auflegens des weiteren Gehäuseteils auf das erste Gehäuseteil, bzw. auch umgekehrt;
Einen Schritt des Eindrehens einer ersten Gehäuseverbindungsschraube und ggf. einer weiteren Gehäuseverbindungsschraube.

Das erfindungsgemäße Verfahren umfasst dabei bevorzugt einen Schritt des Führens der wenigstens einen ersten Gehäuseverbindungsschraube durch eine erste Montagebohrung im ersten Gehäuseteil.

Das erfindungsgemäße Verfahren umfasst dabei bevorzugt einen Schritt des Einschraubens der Gehäuseverbindungsschraube in das weitere Gehäuseteil mit ihrem Gewinde.

Die oben beschriebenen Aufgaben werden ebenfalls erfindungsgemäß gelöst durch ein Montageverfahren zum Montieren eines Sensorgehäuses für einen Sensor nach der vorliegenden Erfindung an einer Befestigungsfläche umfassend wenigstens die folgenden Schritte:
Einen Schritt des Bereitstellens eines Sensors mit einem Sensorgehäuse nach der vorliegenden Erfindung;
Einen Schritt des Anlegens des Sensorgehäuses, insbesondere einer Anlagefläche des ersten Gehäuseteils, an einer Befestigungsfläche eines vorbestimmten Befestigungsortes;
Einen Schritt des Verschraubens des Sensorgehäuses mit der Befestigungsfläche mittels einer Montageschraube in einer Befestigungsmontagebohrung des Sensorgehäuses.

Es sei im Zusammenhang mit dem erfindungsgemäßen Herstellungsverfahren und/oder dem erfindungsgemäßen Montageverfahren auch darauf hingewiesen, dass die angegebenen Schritte nicht zwangsläufig in der angegebenen Reihenfolge durchgeführt werden müssen. Die angegebenen Schritte können in jeder anderen geeigneten Reihenfolge oder auch gleichzeitig durchgeführt werden.

Allerdings kann die oben angegebene Reihenfolge für bestimmte Ausführungsformen des erfindungsgemäßen Verfahrens vorteilhaft sein. Gleichzeitig kann zum Beispiel ein Schritt des Anordnens von Sensorik- und/oder Elektronik-komponenten innerhalb des ersten Gehäuseteils vor einem Schritt des Bereitstellens eines weiteren Gehäuseteils oder sogar gleichzeitig oder danach durchgeführt werden.

Es wird zudem von einem Fachmann anerkannt werden, dass ein Merkmal, eine Ausführungsform, eine Wirkung oder ein Vorteil, wie hier in Verbindung mit dem erfinderischen Sensorgehäuse und/oder dem erfinderischen Sensor beschrieben, auch ein Merkmal, eine Ausführungsform, eine Wirkung oder ein Vorteil des erfinderischen Herstellungsverfahrens und/oder des erfinderischen Montageverfahren sein kann, bzw. umgekehrt.

In der vorliegenden Beschreibung und den beigefügten Ansprüchen wird, sofern der Kontext nichts anderes erfordert, das Wort "umfassen" und Variationen wie "umfasst" und "umfassend" so verstanden, dass sie die Einbeziehung eines angegebenen Elements, einer ganzen Zahl oder eines Schritts oder einer Gruppe von Elementen, Ganzen Zahlen oder Schritten implizieren, jedoch nicht den Ausschluss eines anderen Elements, einer anderen ganzen Zahl oder eines anderen Schritts oder einer anderen Gruppe von Elementen, Ganzen Zahlen oder Schritten, obwohl in einigen Ausführungsformen solche anderen Elemente, ganze Zahlen oder Schritte oder Gruppen von Elementen, Ganzen Zahlen oder Schritten ausgeschlossen sein können, d.h. der Gegenstand besteht in der Einbeziehung eines angegebenen Elements, einer ganzen Zahl oder eines Schritts oder einer Gruppe von Elementen, Ganzen Zahlen oder Schritten.

Die Begriffe "ein" und "eine" und "das" und ähnliche Referenzen, die im Kontext der Beschreibung der Erfindung (insbesondere im Kontext der Ansprüche) verwendet werden, sind so auszulegen, dass sie sowohl den Singular als auch den Plural abdecken, sofern hierin nicht anders angegeben oder durch den Kontext eindeutig widersprochen. Die Angabe von Wertebereichen dient lediglich als Kurzform, um sich einzeln auf jeden einzelnen Wert innerhalb des Bereichs zu beziehen. Sofern hierin nicht anders angegeben, ist jeder einzelne Wert in die Spezifikation aufgenommen, als ob er hierin einzeln aufgeführt wäre.

Innerhalb der vorliegenden Anmeldung beziehen sich Begriffe wie "seitlich" oder "lateral", "hinten", "vorne", "oben", "unten", "Boden", "gegenüber", "innen", "außen" oder dergleichen, die die Position eines ersten Objekts relativ zu einem anderen Objekt beschreiben, vorzugsweise auf die relative Position eines jeweiligen Teils oder Objekts in Bezug auf seine Position, wenn es vollständig für seinen vorgesehenen Gebrauch montiert ist.

In einer bevorzugten Ausführungsform des erfindungsgemäßen Herstellungs- und/oder Montageverfahrens und/oder des erfindungsgemäßen Sensorgehäuses und/oder Sensors weist eines der Gehäuseteile, also das erste Gehäuseteil und/oder ein weiteres Gehäuseteil, wenigstens eine an einer Domverbindungsstelle mit einem Dom auf und das andere Gehäuseteil weist an der Domverbindungsstelle eine an den Dom angepasste Aussparung auf. Damit wird erreicht, dass in dem Zustand, in dem das weitere Gehäuseteil das erste Gehäuseteil abdeckt, der Dom formschlüssig in der Aussparung angeordnet ist.

Dies ist insbesondere vorteilhaft, da die formschlüssige Anordnung des Doms in der angepassten Aussparung eine präzise und stabile Verbindung zwischen den Gehäuseteilen gewährleistet. Insbesondere im Herstellungsverfahren ist dies von Vorteil, da der Dom in die entsprechende Aussparung greift bzw. eintaucht und hierdurch die Gehäuseteile zum Formschluss zueinander führt. Dies verbessert die Zusammensetzung der beiden Gehäusehälften, fehlerfrei und einfach. Die Dom-Verbindungen, insbesondere auch wie im Folgenden beschriebene Schraubdome, sowie Verbindungen ohne Dom, bspw. einfache Schraubverbindungen, oder Rastverbindungen, können im Pokayoke-Prinzip angeordnet sein und somit eine eindeutige Orientierung der Gehäuseteile zueinander vereinfachen. Diese Konstruktion verhindert ein Verrutschen oder Verdrehen der Gehäuseteile zueinander, was die strukturelle Integrität und die mechanische Stabilität des gesamten Sensorgehäuses erhöht. Darüber hinaus erleichtert diese formschlüssige Verbindung den Herstellungsprozess, da die Gehäuseteile automatisch in die korrekte Position geführt werden, was die Effizienz und Genauigkeit der Herstellung verbessert.

Es soll verstanden sein, dass grundsätzlich die Wahl des Gehäuseteils welches den Dom aufweist und die Wahl des Gehäuseteils, welches die passende Aussparung aufweist frei ist. Mit anderen Worten kann das erste Gehäuseteil einen Dom aufweisen und das weitere Gehäuseteil an einer entsprechend gegenüberangeordneten Stelle die Aussparung oder umgekehrt. Es können auch mehrere Dome und Aussparungen vorgesehen sein, die wahlweise auf dem einen oder anderen Gehäuseteil angeordnet sein können. Auch kann ein Gehäuseteil an einer Stelle einen Dom und an einer weiteren Stelle eine Aussparung aufweisen, wobei das entsprechende Gegenstück dann die jeweils andere Konfiguration aufweist.

Im Rahmen der vorliegenden Erfindung liegt es zudem die Anzahl der Dome und Schraubverbindungsstellen abhängig von der genauen Konfiguration des Sensorgehäuses zu bestimmen. Es ist bevorzugt, dass wenigstens eine Schraubverbindungsstelle und wenigstens eine Domverbindungsstelle vorgesehen sind. Es ist jedoch auch im Rahmen der vorliegenden Erfindung dass mehr als eine Schraubverbindungsstelle und wenigstens eine Domverbindungsstelle vorgesehen sind und/oder dass wenigstens eine Schraubverbindungsstelle und mehr als eine Domverbindungsstelle vorgesehen sind.

Es soll dabei verstanden werden, dass der Dom mit Hinblick auf das Herstellungsverfahren vorteilhaft ist. Der Dom erlaubt eine formschlüssige Verbindung der Gehäuseteile und führt beim Zusammenfügen der Gehäuseteile die Gehäuseteile zueinander. Dies erlaubt insbesondere, dass die Gehäuseteile ohne Relativbewegungen, Reibung, Scherkräfte oder ähnliches zum Formschluss zusammengefügt werden. Eine ggf. vorhandene Dichtung wird somit nicht beschädigt oder gequetscht.

Eine Dichtung ist in einer bevorzugten Ausführungsform des erfindungsgemäßen Herstellungs- und/oder Montageverfahrens und/oder des erfindungsgemäßen Sensorgehäuses und/oder Sensors bevorzugt entlang der Randung der Fügefläche zwischen erstem und weiterem Gehäuseteil vorgesehen. Hier kann eine Nut ausgebildet sein, in der ein Dichtelement angeordnet ist. Dabei ist es vorteilhaft, wenn eine solche Nut bzw. ein solches Dichtelement innerhalb von Schraubverbindungsstellen und/oder Domverbindungsstellen angeordnet ist. Hierdurch wird bei der Herstellung des Sensorgehäuses das Dichtelement nicht beschädigt. Es kann zudem auf etwaige Ausrichthilfen im besten Fall verzichtet werden, so dass auch hier Bauraum vorteilhaft reduziert werden kann.

In einer bevorzugten Ausführungsform des erfindungsgemäßen Herstellungs- und/oder Montageverfahrens und/oder des erfindungsgemäßen Sensorgehäuses und/oder Sensors weist das weitere Gehäuseteil an einer Domverbindungsstelle den wenigstens einen Dom auf und das erste Gehäuseteil weist an der Domverbindungsstelle die an den wenigstens einen Dom angepasste Aussparung auf, so dass in dem Zustand, in dem das weitere Gehäuseteil das erste Gehäuseteil abdeckt, der wenigstens eine Dom formschlüssig in der Aussparung angeordnet ist.

In einer weiteren bevorzugten Ausführungsform des erfindungsgemäßen Herstellungs- und/oder Montageverfahrens und/oder des erfindungsgemäßen Sensorgehäuses und/oder Sensors weist das erste Gehäuseteil an einer Domverbindungsstelle den wenigstens einen Dom auf und das weitere Gehäuseteil weist an der Domverbindungsstelle die an den wenigstens einen Dom angepasste Aussparung auf, so dass in dem Zustand, in dem das weitere Gehäuseteil das erste Gehäuseteil abdeckt, der wenigstens eine Dom formschlüssig in der Aussparung angeordnet ist.

In einer bevorzugten Ausführungsform des erfindungsgemäßen Herstellungs- und/oder Montageverfahrens und/oder des erfindungsgemäßen Sensorgehäuses und/oder Sensors ist der wenigstens eine Dom als Schraubdom mit einer Längsachse (A) und einer Dom-Montagebohrung ausgebildet, entlang welcher eine weitere Gehäuseverbindungsschraube mit ihrem Gewinde in den Schraubdom einschraubbar ist.

Bevorzugt ist eine Domverbindungsstelle die erste Schraubverbindungsstelle.

Ein Schraubdom ermöglicht eine besonders stabile und sichere Verbindung der Gehäuseteile. Der Schraubdom sorgt dafür, dass die Gehäuseverbindungsschraube präzise geführt und fest verankert wird, was die mechanische Stabilität und die strukturelle Integrität des Sensorgehäuses erhöht. Zudem erleichtert die klare Führung der Schraube den Herstellungsprozess, da die Schraube ohne zusätzliche Justierung direkt in die vorgesehene Position gebracht werden kann und gleichzeitig die beiden Gehäuseteile mit Dom und Aussparung formschlüssig verbunden sind.

Besonders vorteilhaft ist der Schraubdom an der wenigstens einen ersten Schraubverbindungsstelle vorgesehen. Damit werden die Vorteile des Domes und die Vorteile der Gehäuseverbindungsschraube an der Schraubverbindungsstelle mit Montagebohrung und Befestigungsmontagebohrung besonders vorteilhaft kombiniert.

Im Rahmen der vorliegenden Erfindung liegt es zudem, die Anzahl der Dome, die als Schraubdom ausgeführt sind, die Anzahl der Dome, die nicht als Schraubdom ausgeführt sind und die Schraubverbindungsstellen abhängig von der genauen Konfiguration des Sensorgehäuses zu bestimmen. Es ist bevorzugt, dass wenigstens eine Schraubverbindungsstelle als Schraubdom ausgeführt ist.

Ebenfalls ist die Schraubrichtung der Gehäuseverbindungsschraube an der Schraubverbindungsstelle mit oder ohne Dom nicht grundsätzlich festgelegt und im Rahmen der Erfindung wählbar. Es ist jedoch bevorzugt, dass die Gehäuseverbindungsschraube an der Schraubverbindungsstelle von der für die Anlage an einer Befestigungsfläche vorgesehenen Anlagefläche aus in das Sensorgehäuse eingedreht wird. Insoweit kann ein Schraubdom zusätzlich die Eindringtiefe einer Gehäuseverbindungsschraube in das entsprechende Gehäuseteil vorteilhaft verändern.

In einer vorteilhaften Ausführungsform zeigt der Dom mit seiner Domspitze entlang der Längsachse der Montagebohrung und entgegen der Schraubrichtung. Hierdurch wird die Eindringtiefe der Gehäuseverbindungsschraube in das entsprechende Gehäuseteil vorteilhaft verlängert.

In einer bevorzugten Ausführungsform des erfindungsgemäßen Herstellungs- und/oder Montageverfahrens und/oder des erfindungsgemäßen Sensorgehäuses und/oder Sensors ist das erste Gehäuseteil mit dem weiteren Gehäuseteil in einem Zustand, in dem das weitere Gehäuseteil das erste Gehäuseteil abdeckt, mittels einer weiteren Gehäuseverbindungsschraube an wenigstens einer weiteren Schraubverbindungsstelle miteinander verschraubbar, und die weitere Schraubverbindungsstelle weist keinen Schraubdom auf.

Mit anderen Worten sind wenigstens zwei Schraubverbindungsstellen vorhanden, wobei wenigstens die weitere Schraubverbindungsstelle keinen Schraubdom aufweist. Bevorzugt weist dabei die erste Schraubverbindungsstelle einen Schraubdom auf, ist also eine Domverbindungsstelle.

In einer bevorzugten Ausführungsform des erfindungsgemäßen Herstellungs- und/oder Montageverfahrens und/oder des erfindungsgemäßen Sensorgehäuses und/oder Sensors weist das erste Gehäuseteil an der ersten Schraubverbindungsstelle und/oder der weiteren Schraubverbindungsstelle eine erste Montagebohrung auf und das weitere Gehäuseteil weist an der ersten Schraubverbindungsstelle und/oder der weiteren Schraubverbindungsstelle eine weitere Montagebohrung auf, entlang welcher die wenigstens eine erste Gehäuseverbindungsschraube durch das erste Gehäuseteil geführt und in das weitere Gehäuseteil mit ihrem Gewinde einschraubbar ist.

Bevorzugt ist die erste und/oder weitere Montagebohrung an einer Rückseite, bzw. der einer Befestigungsfläche für den Sensor zugewandten Anlagefläche vorgesehen.

In einer bevorzugten Ausführungsform des erfindungsgemäßen Herstellungs- und/oder Montageverfahrens und/oder des erfindungsgemäßen Sensorgehäuses und/oder Sensors ist das erste Gehäuseteil aus Metall, insbesondere aus Aluminium, bevorzugt einem Aluminium-Druckguss, hergestellt.

Dies ist insbesondere vorteilhaft, da die Verwendung von Metall, insbesondere Aluminium, bevorzugt in Form von Aluminium-Druckguss, für das erste Gehäuseteil eine hohe mechanische Festigkeit und Stabilität gewährleistet. Insbesondere kann ein Innengewinde, bspw. einer Befestigungsmontagebohrung für eine Montageschraube bereits im Druckgussverfahren mit gefertigt werden, was den Fertigungsprozess effizienter macht.

Alternativ kann das Gewinde nachträglich eingeschnitten oder als Helicoils eingebracht werden, was Flexibilität in der Fertigung bietet.

In einer bevorzugten Ausführungsform des erfindungsgemäßen Herstellungs- und/oder Montageverfahrens und/oder des erfindungsgemäßen Sensorgehäuses und/oder Sensors ist das weitere Gehäuseteil aus Kunststoff, bevorzugt einem Kunststoff-Spritzguss, weiter bevorzugt, einem Kunststoff-Spritzguss ausgewählt aus der Gruppe umfassend Polycarbonat (PC) und/oder Acrylnitril-Butadien-Styrol (ABS), hergestellt. Dies ist insbesondere vorteilhaft, da die Verwendung von Kunststoff, bevorzugt in Form von Kunststoff-Spritzguss, für das weitere Gehäuseteil eine hohe Flexibilität und Designfreiheit ermöglicht.

Es ist dabei daran gedacht, dass insbesondere in Ausführungsformen, in denen das weitere Gehäuseteil aus Kunststoff hergestellt ist, eine Gehäuseverbindungsschraube an wenigstens einer ersten Schraubverbindungsstelle in den Kunststoff eindringen wird. Dies kann insbesondere bei der Verwendung von selbstschneidenden Schrauben vorteilhaft sein.

Ebenfalls, kann insbesondere an einer Domverbindungsstelle der wenigstens eine Dom und/oder die an den Dom angepasste Aussparung aus Kunststoff oder aus Metall gefertigt sein, abhängig von dem Material aus dem das jeweilige Gehäuseteil gefertigt ist.

In einer besonders bevorzugten Ausführungsform ist wenigstens ein Dom aus Kunststoffgefertigt und gleichzeitig als Schraubdom ausgeführt, so dass die Gehäuseverbindungsschraube an der Schraubverbindungsstelle in den Dom eingeschraubt wird.

In einer bevorzugten Ausführungsform des erfindungsgemäßen Herstellungs- und/oder Montageverfahrens und/oder des erfindungsgemäßen Sensorgehäuses und/oder Sensors ist an dem weiteren Gehäuseteil, bevorzugt an einer Sichtfläche des Sensorgehäuses, weiter bevorzugt einem Randbereich des weiteren Gehäuseteils umlaufend oder abschnittsweise, bevorzugt an wenigstens einer Ecke des weiteren Gehäuseteils, insbesondere einer Ecke der Sichtfläche, ein Lichtleiter angeordnet und/oder anordenbar.

Das erfindungsgemäße Sensorgehäuse erlaubt das besonders einfache Anbringen eines solchen Lichtleiters, der insbesondere zur Kommunikation mit einem Nutzer verwendet werden kann und dazu beiträgt, Informationen über den Sensor und/oder Sensordaten an den Nutzer zu visualisieren. Bspw. kann der Betriebszustand des Sensors visuell mittels des Lichtleiters angezeigt werden, was die Benutzerfreundlichkeit und die Wartung erleichtert. Zudem kann der Lichtleiter als optisches Signal dienen, um den Status oder Fehlermeldungen des Sensors anzuzeigen, was die Effizienz und Sicherheit im Betrieb erhöht. Die flexible Anordnung des Lichtleiters ermöglicht eine Anpassung an verschiedene Designanforderungen und Einsatzbedingungen, was die Vielseitigkeit und Funktionalität des Sensorgehäuses weiter steigert.

In einer bevorzugten Ausführungsform des erfindungsgemäßen Herstellungs- und/oder Montageverfahrens und/oder des erfindungsgemäßen Sensorgehäuses und/oder Sensors weist das erste Gehäuseteil eine Anlagefläche auf, die zur flächigen Montage des Sensorgehäuses an einer Befestigungsfläche ausgebildet ist. Weiter ist eine Fügefläche des ersten Gehäuseteils und des weiteren Gehäuseteils gegenüber der Anlagefläche geneigt ausgebildet.

Dies ist insbesondere vorteilhaft, da die Anlagefläche des ersten Gehäuseteils eine flächige Montage des Sensorgehäuses an einer Befestigungsfläche ermöglicht. Diese flächige Montage sorgt für eine gleichmäßige Verteilung der mechanischen Belastungen, was die Stabilität und Haltbarkeit des Sensorgehäuses erhöht. Die geneigte Ausbildung der Fügefläche des ersten Gehäuseteils und des weiteren Gehäuseteils gegenüber der Anlagefläche erleichtert zudem die präzise Ausrichtung und Verbindung der Gehäuseteile. Dies verbessert die strukturelle Integrität und die Dichtigkeit des Sensorgehäuses, was wiederum die Zuverlässigkeit und Langlebigkeit des Sensors steigert.

Der Begriff "Fügefläche", wie hierin verwendet, bezeichnet bevorzugt die Kontaktfläche des ersten Gehäuseteils und des weiteren Gehäuseteils, die bei der Herstellung des Sensorgehäuses miteinander in Berührung kommen. Diese Fläche ist so gestaltet, dass sie eine präzise und stabile Verbindung zwischen den beiden Gehäuseteilen ermöglicht. Die Fügefläche kann geneigt oder anders geformt sein, um eine optimale Passform und Dichtigkeit zu gewährleisten, was die strukturelle Integrität und die mechanische Stabilität des gesamten Sensorgehäuses erhöht.

Bevorzugt ist die Fügefläche des ersten Gehäuseteils und des weiteren Gehäuseteils gegenüber der Anlagefläche geneigt ausgebildet, wobei der von der Anlagefläche und der Fügefläche eingeschlossene Winkel wenigstens 10°, weiter bevorzugt wenigstens 20°, noch weiter bevorzugt wenigstens 30° aufweist. Gleichzeitig ist eine Begrenzung des Winkels nach oben vorteilhaft, so dass bevorzugt der von der Anlagefläche und der Fügefläche eingeschlossene Winkel höchstens 45°, weiter bevorzugt höchstens 40° aufweist.

In einer weiteren bevorzugten Ausführungsform ist die Hauptfläche der ersten Gehäusehälfte die Anlagefläche des Sensorgehäuses. In einer weiteren bevorzugten Ausführungsform ist die Hauptfläche der weiteren Gehäusehälfte im Wesentlichen parallel zu der Anlagefläche des Sensorgehäuses. Damit erreicht die erfindungsgemäße Sensorgehäuse eine besonders kompakte Dimensionierung und die Anlagefläche und die Hauptfläche der weiteren Gehäusehälfte sind im Wesentlichen parallel zu der Befestigungsfläche angeordnet.

In einer bevorzugten Ausführungsform des erfindungsgemäßen Herstellungs- und/oder Montageverfahrens und/oder des erfindungsgemäßen Sensorgehäuses und/oder Sensors ist die erste Montagebohrung gegenüber der Befestigungsmontagebohrung derart angeordnet, dass innerhalb der Befestigungsmontagebohrung eine Anschlagsfläche für die erste und/oder weitere Gehäuseverbindungsschraube ausgebildet ist. Dies ermöglicht einen besonders guten Halt der Gehäuseverbindungsschraube an der Schraubverbindungsstelle, indem bei einem Festziehen der Gehäuseverbindungsschraube, die Anschlagsfläche als Anlage für den Schraubenkopf der Gehäuseverbindungsschraube dient.

In einer bevorzugten Ausführungsform des erfindungsgemäßen Herstellungs- und/oder Montageverfahrens und/oder des erfindungsgemäßen Sensorgehäuses und/oder Sensors sind eine erste Anschlagsfläche einer ersten Schraubverbindungsstelle und eine weitere Anschlagsfläche einer weiteren Schraubverbindungsstelle in einer Ebene angeordnet, die bevorzugt parallel zu der Anlagefläche ausgerichtet ist.

Dies ist insbesondere vorteilhaft, da die Anordnung der ersten Anschlagsfläche einer ersten Schraubverbindungsstelle und der weiteren Anschlagsfläche einer weiteren Schraubverbindungsstelle in einer Ebene, die bevorzugt parallel zur Anlagefläche ausgerichtet ist, eine gleichmäßige Verteilung der mechanischen Belastungen ermöglicht. Diese parallele Ausrichtung sorgt dafür, dass die Kräfte, die auf die Schraubverbindungen wirken, gleichmäßig verteilt werden, was die strukturelle Integrität und Stabilität des Sensorgehäuses erhöht.

In einer bevorzugten Ausführungsform der vorliegenden Erfindung ist die Schnittlänge der ersten Gehäuseverbindungsschraube und einer weiteren Gehäuseverbindungsschraube, bevorzugt aller Gehäuseverbindungsschrauben, unabhängig davon, ob sie in einen Schraubdom oder eine Schraubverbindungsstelle ohne Dom eingedreht werden im Wesentlichen gleich. Mit anderen Worten wird die Schneidtiefe der Gehäuseverbindungsschrauben abhängig vom vorhanden sein etwaiger Schraubdome und/oder einer Neigung der Fügefläche so gewählt, dass diese in das Material des entsprechenden Gehäuseteils gleich tief eindringen.

Bevorzugt ist in eingedrehtem, zusammengebautem Zustand ist der Abstand aller Schrauben mit und ohne Dom zur unteren Hauptgehäuseebene bzw. der Anlagefläche gleich, sodass alle Schrauben gleich tief eingedreht werden. Mit anderen Worten sind alle Schraubenköpfe gleich tief versenkt. Dies gilt bevorzugt für verschiedene erste und weitere Verbindungsstellen.

Die Schneidtiefe der Schrauben wird durch den Dom verlängert, sodass diese auch an der "dünneren" Stelle des abdeckenden Gehäuseteils gleich tief ist wie an der "dickeren" Stelle. Dies bedeutet, dass die Dome gleichermaßen genutzt werden, um das Gehäuseteil nicht unnötig dick werden zu lassen. Dadurch sind alle genutzten Schrauben mit der gleichen Schneidtiefe versehen, was den Vorteil bietet, in der Fertigung die gleichen Drehmomente nutzen zu können. Dies führt zu einer effizienteren und konsistenteren Herstellung des Sensorgehäuses und erhöht die strukturelle Integrität und Zuverlässigkeit des Sensorgehäuses.

In einer bevorzugten Ausführungsform des erfindungsgemäßen Herstellungs- und/oder Montageverfahrens und/oder des erfindungsgemäßen Sensorgehäuses und/oder Sensors ist das weitere Gehäuseteil wenigstens teilweise für die vom Sensor detektierten Messgröße durchlässig, bspw. lichtdurchlässig für eine optische Kamera, um die Durchsicht der Sensorik zu ermöglichen.

Der Begriff "Sichtfläche", wie hierin verwendet bezeichnet bevorzugt einen Teil des Gehäuses, der einem Benutzer zugewandt ist, wenn der erfindungsgemäße Sensor bzw. das erfindungsgemäße Sensorgehäuse bestimmungsgemäß zur Benutzung montiert ist. Zusätzlich oder alternativ bezeichnet der Begriff "Sichtfläche", wie hierin verwendet bevorzugt einen Teil des Gehäuses, welcher dem Bereich zugewandt ist, der mit dem erfindungsgemäßen Sensor überwacht werden soll. Dabei wird der Fachmann unmittelbar verstehen, dass, insbesondere bei optischen Sensoren, eine Sichtfläche auch, wenigstens teilweise ein Gehäuseteil wenigstens teilweise für die vom Sensor detektierten Messgröße durchlässig, bspw. lichtdurchlässig für eine optische Kamera, ausgestaltet sein kann, um die Durchsicht der Sensorik zu ermöglichen oder dem Nutzer den Blick auf ein hinter dieser Fläche angeordnetes Element, bspw. ein Anzeigeelement, zu ermöglichen. Hierzu kann ein Gehäuseteil, insbesondere eine Abdeckung, eine Sichtscheibe umfassen.

In einer bevorzugten Ausführungsform kann ein Gehäuseteil, insbesondere eine Abdeckung, eine Sichtscheibe umfassen, die besonders bevorzugt die Sichtfläche oder ein Teil davon ist. Der für die vom Sensor detektierten Parameter wenigstens teilweise durchlässige Gehäuseteil ist bevorzugt ein der Anlagefläche abgewandte Teil des Sensorgehäuses, welches besonders bevorzugt die Sichtfläche ist. Insbesondere kann ein solcher Gehäuseteil, insbesondere eine Abdeckung, mehrteilig, bevorzugt zweiteilig, ausgeführt werden. Beispielsweise kann eine Sichtscheibe die Durchsicht der Sensorik durch einen ersten Gehäuseteil erlauben, während ein anderer Gehäuseteil für die vom Sensor detektierte Messgröße nicht durchlässig ist.

In einer bevorzugten Ausführungsform des erfindungsgemäßen Herstellungs- und/oder Montageverfahrens und/oder des erfindungsgemäßen Sensorgehäuses und/oder Sensors umfasst das Sensorgehäuse wenigstens einen Anschluss und/oder eine Anschlussbohrung zur Durchführung von Datenverbindungen und/oder Versorgungsleitungen.

### Kurzbeschreibung der Figuren

Die vorliegende Erfindung wird im Folgenden ausführlicher erläutert unter Bezugnahme auf die Zeichnungen, aus denen weitere Merkmale, Ausführungsformen und Vorteile entnommen werden können. In den in den Abbildungen gezeigten Ausführungsformen werden Elemente, die ähnliche oder identische Funktionen haben, mit gleichen Bezugszeichen versehen. Es wird darauf hingewiesen, dass die Abbildungen möglicherweise nicht maßstabsgetreu zueinander sind.

Dabei zeigt:
FIG 1A und FIG 1B zeigt eine schematische Schnittzeichnung eines Sensorgehäuses nach einer ersten Ausführungsform der vorliegenden Erfindung;
FIG 2A zeigt eine schematische Schnittzeichnung eines Sensorgehäuses nach einer ersten Ausführungsform der vorliegenden Erfindung, befestigt an einer Befestigungsfläche;
FIG 2B zeigt eine perspektivische Darstellung eines Sensorgehäuses nach einer ersten Ausführungsform der vorliegenden Erfindung, befestigt an einer Befestigungsfläche;
FIG 3A und FIG 3B zeigt eine perspektivische Darstellung eines Sensorgehäuses nach einer ersten Ausführungsform der vorliegenden Erfindung.

### Detaillierte Beschreibung

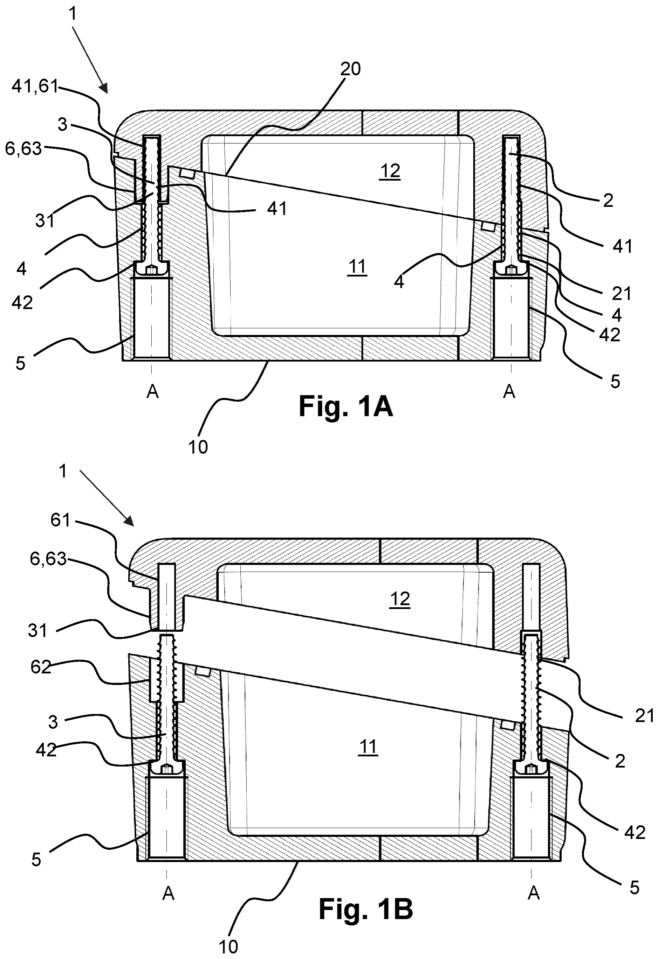

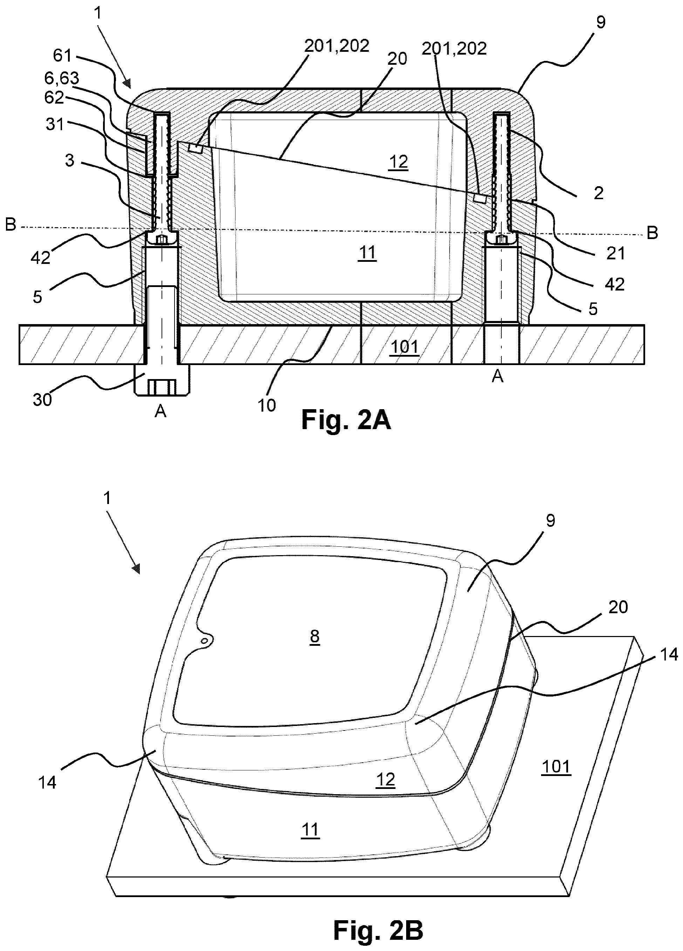

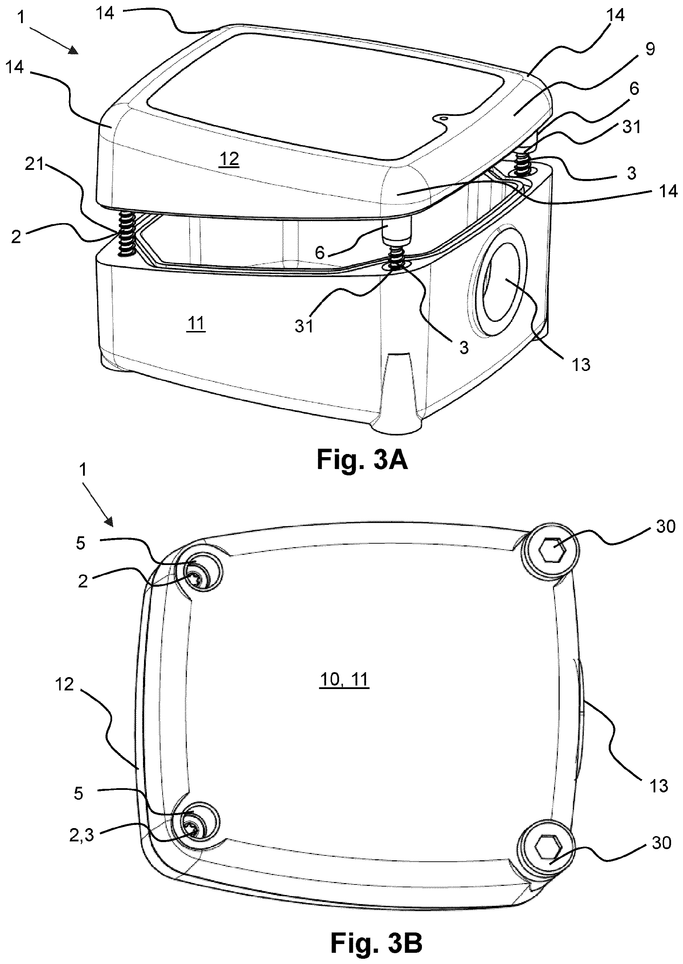

FIG 1A und FIG 1B zeigt eine schematische Schnittzeichnung eines Sensorgehäuses nach einer ersten Ausführungsform der vorliegenden Erfindung. Dabei ist ersichtlich, dass das Sensorgehäuse 1 für einen Sensor, insbesondere einen optischen Sensor, wenigstens ein erstes Gehäuseteil 11 umfasst, das als eine Aufnahme für Sensorik- und/oder Elektronik-komponenten ausgebildet ist und ein weiteres Gehäuseteil 12 umfasst, das dazu ausgebildet ist, das erste Gehäuseteil 11 abzudecken. In FIG 1A, FIG 2A und in FIG 2B ist das Sensorgehäuse 1 in einem Zustand gezeigt, in dem das weitere Gehäuseteil 12 das erste Gehäuseteil 11 abdeckt. Dabei sind beide Gehäuseteile 11 und 12 mittels wenigstens einer ersten Gehäuseverbindungsschraube 2 an wenigstens einer ersten Schraubverbindungsstelle 21 miteinander verschraubt. Das erste Gehäuseteil 11 weist hierzu an der wenigstens einen ersten Schraubverbindungsstelle 21 eine erste Montagebohrung 4 auf, entlang welcher die wenigstens eine erste Gehäuseverbindungsschraube 2 durch das erste Gehäuseteil 11 geführt und in das weitere Gehäuseteil 12 mit ihrem Gewinde eingeschraubt ist. In FIG 1B und FIG 3A ist das Sensorgehäuse 1 in einem Zustand gezeigt, in dem die Gehäuseverbindungsschraube 2 durch das erste Gehäuseteil 11 geführt aber noch nicht in das weitere Gehäuseteil 12 mit ihrem Gewinde eingeschraubt ist.

Das erste Gehäuseteil 11 weist an der wenigstens einen ersten Schraubverbindungsstelle 21 eine Befestigungsmontagebohrung 5 auf, um mit einer ersten Montageschraube 30 das Sensorgehäuse 1, insbesondere das erste Gehäuseteil 11, mit einer Anlagefläche 10 an einer Befestigungsfläche 101 eines vorbestimmten Befestigungsortes zu befestigen. Dies ist schematisch in FIG 2A und 2B gezeigt. Zudem zeigt FIG 3B eine perspektivische Ansicht des Sensorgehäuses 1, in der die Montageschrauben 30 an zwei Befestigungsmontagebohrungen 5 bereits angebracht sind und diese verdecken (in FIG 3B die beiden rechten Montageschrauben 30), während in den beiden weiteren Montagebohrungen 5 (in FIG 3B die beiden linken Montagebohrungen 5) die Montageschrauben 30 noch nicht in den zwei Befestigungsmontagebohrungen 5 angebracht sind, so dass die Köpfe der darin angebrachten Gehäuseverbindungsschrauben 2 noch zu sehen sind. Dies ist der Fall, da die erste Montagebohrung 4 und die Befestigungsmontagebohrung 5 entlang einer, insbesondere in FIG 1A und 1B, sowie FIG 2A gezeigten, gemeinsamen Längsachse (A) angeordnet sind. Dabei weisen die Befestigungsmontagebohrungen 5 einen Durchmesser auf, der größer ist als der Durchmesser der ersten Montagebohrung 4. Besonders vorteilhaft ist die erste Montagebohrung 4 gegenüber der Befestigungsmontagebohrung 5 derart angeordnet, dass innerhalb der Befestigungsmontagebohrung 5 eine Anschlagsfläche 42 für die erste und/oder weitere Gehäuseverbindungsschraube 2, 3 ausgebildet ist. Dies ist besonders einfach zu erreichen, in dem der Durchmesser der Montagebohrung 5, der größer gewählt ist als der Durchmesser der ersten Montagebohrung 4, so viel größer gewählt wird, dass dieser eine ausreichende Anschlagsfläche 42 für den Schraubenkopf der Gehäuseverbindungsschraube 2, 3 aufweist. Bevorzugt und wie insbesondere in FIG 2A exemplarisch dargestellt, ist eine erste Anschlagsfläche 42 einer ersten Schraubverbindungsstelle 21 und eine weitere Anschlagsfläche 42 einer weiteren Schraubverbindungsstelle 31 in einer Ebene B angeordnet, die parallel zu der Anlagefläche 10 ausgerichtet ist.

Wie insbesondere aus FIG 1A, 1B, 2A und 3A ersichtlich weist eines der Gehäuseteile, hier das Gehäuseteil 12 an einer Domverbindungsstelle wenigstens einen Dom 6 auf. In den vorliegenden Figuren sind sämtliche Dome als Schraubdome ausgeführt. In diesem Fall dient die Domverbindungsstelle auch als Schraubverbindungsstelle. Die vorliegende Erfindung ist jedoch darauf nicht beschränkt. Vielmehr sind in verschiedenen Ausführungsformen der vorliegenden Erfindungen auch wenigstens eine Domverbindungsstelle ohne Verschraubung vorgesehen. Aus den Figuren unmittelbar ersichtlich weist das jeweils andere Gehäuseteil 12 eine an den Dom 6 angepasste Aussparung 62 auf, so dass in dem Zustand, in dem das weitere Gehäuseteil 12 das erste Gehäuseteil 11 abdeckt, der Dom 6 formschlüssig in der Aussparung 62 angeordnet ist.

Wie eingangs erwähnt ist in der dargestellten Ausführungsform der vorliegenden Erfindung der auf der linken Seite der Figuren 1A, 1B und 2A dargestellte Dom 6 als Schraubdom 63 mit einer Längsachse (A) und einer Dom-Montagebohrung 61 ausgebildet. Der Dom ist ebenfalls entlang der Längsachse (A) ausgebildet, entlang welcher die Gehäuseverbindungsschraube 3 mit ihrem Gewinde in den Schraubdom 63 einschraubbar ist. Gleichzeitig ist das erste Gehäuseteil 11 mit dem weiteren Gehäuseteil 12 mittels der weiteren Gehäuseverbindungsschraube 2 (in den Figuren 1A, 1B und 2A rechts dargestellt) an wenigstens einer weiteren Schraubverbindungsstelle 21 miteinander verschraubbar, wobei die weitere Schraubverbindungsstelle 21 keinen Schraubdom 6 aufweist. Um das Eindrehen der Gehäuseverbindungsschraube 2 zu erleichtern, kann das erste Gehäuseteil 11 an der ersten Schraubverbindungsstelle 21 und/oder der weiteren Schraubverbindungsstelle 31 eine erste Montagebohrung 4 aufweisen. Zudem kann das weitere Gehäuseteil 12 an der ersten Schraubverbindungsstelle 21 und/oder der weiteren Schraubverbindungsstelle 31 eine weitere Montagebohrung 41 aufweisen. Entlang dieser Montagebohrungen 4 und/oder 41 kann die erste Gehäuseverbindungsschraube 2 durch das erste Gehäuseteil 11 geführt und in das weitere Gehäuseteil 12 mit ihrem Gewinde eingeschraubt werden.

In der dargestellten Ausführungsform der vorliegenden Erfindung ist das erste Gehäuseteil 11 aus Metall, nämlich einem Aluminium-Druckguss, hergestellt und das weitere Gehäuseteil 12 aus Kunststoff, nämlich einem Kunststoff-Spritzguss umfassend Polycarbonat (PC) und Acrylnitril-Butadien-Styrol (ABS), hergestellt. Dabei ist, wie besonders in FIG 2B und FIG 3A ersichtlich an einer Sichtfläche 8 des Sensorgehäuses 1 in einem Randbereich des weiteren Gehäuseteils 12 umlaufend oder abschnittsweise, insbesondere im Bereich der Ecke 14 des weiteren Gehäuseteils 12 an einer Ecke 14 der Sichtfläche 8, ein Lichtleiter 9 angeordnet mittels dem Informationen an einen Nutzer visualisiert werden können.

Wie in FIG 2A und 2B ersichtlich hat das erste Gehäuseteil 12 eine Anlagefläche 10, so dass das Gehäuse 1 flächig an einer Befestigungsfläche 101 montiert werden kann.

Besonders aus FIG 1 A ersichtlich ist eine Fügefläche 20 des ersten Gehäuseteils 11 und des Weiteren Gehäuseteils 12 gegenüber der Anlagefläche 10 geneigt ausgebildet. Es ist dabei vorteilhaft, wenn der von der Anlagefläche und der Fügefläche eingeschlossene Winkel wenigstens 5°, weiter bevorzugt wenigstens 10°, noch weiter bevorzugt wenigstens 20° aufweist. Gleichzeitig ist eine Begrenzung des Winkels nach oben vorteilhaft, so dass bevorzugt der von der Anlagefläche und der Fügefläche eingeschlossene Winkel höchstens 45°, weiter bevorzugt höchstens 40°, noch weiter bevorzugt höchstens 30° aufweist.

Ein erfindungsgemäßer Sensor mit einem Sensorgehäuse 1 nach der vorliegenden Erfindung kann insbesondere als oder in einem Positioniergerät und/oder optischen Sensorgerät vorteilhaft eingesetzt werden. Dabei erreicht die vorliegende Erfindung besonders vorteilhaft eine kompakte Bauform und erlaubt, insbesondere durch die Reduktion der sichtbaren Schraubverbindungen, ein ansprechendes Design. Darüber hinaus ist die vorgeschlagene Geometrie und Konfiguration des erfindungsgemäßen Sensorgehäuses besonders stabil und einfach zu fertigen und an für den bestimmungsgemäßen Gebrauch zu montieren. Gleichzeitig ist das zusammenfügen der Gehäuseteile zum Sensorgehäuse 1 besonders einfach und vermeidet Fehler, sowie die Beeinträchtigung von Komponenten, insbesondere der ggf. vorhandenen Gehäusedichtung.

### Referenzzeichenliste

1- Sensorgehäuse
11- erste Gehäusehälfte
12- weitere Gehäusehälfte
13- Anschluss und/oder eine Anschlussbohrung
2- erste Gehäuseverbindungsschraube
21- erste Schraubverbindungsstelle
3- weitere Gehäuseverbindungsschraube
31- weitere Schraubverbindungsstelle
4- erste Montagebohrung
41- weitere Montagebohrung
42- Gehäuseverbindungsschraubenanschlag
5- Befestigungsmontagebohrung
6- Dom, Domverbindungsstelle
61- Dom-Montagebohrung
62- Aussparung
63- Schraubdom
8- Sichtfläche
9- Randbereich
14- Ecke
10- Anlagefläche
101- Befestigungsfläche
20- Fügefläche
201- Nut
202- Dichtelement
30- Montageschraube
A Längsachse
B Ebene

## Patentansprüche

1. Sensorgehäuse (1) für einen Sensor, insbesondere einen optischen Sensor, umfassend wenigstens
a. ein erstes Gehäuseteil (11), das als eine Aufnahme für Sensorik- und/oder Elektronik-komponenten ausgebildet ist und ein weiteres Gehäuseteil (12), das dazu ausgebildet ist, das erste Gehäuseteil (11) abzudecken;
b. wobei das erste Gehäuseteil (11) mit dem weiteren Gehäuseteil (12) in einem Zustand, in dem das weitere Gehäuseteil (12) das erste Gehäuseteil (11) abdeckt, mittels wenigstens einer ersten Gehäuseverbindungsschraube (2) an wenigstens einer ersten Schraubverbindungsstelle (21) miteinander verschraubbar ist,
c. wobei das erste Gehäuseteil (11) an der wenigstens einen ersten Schraubverbindungsstelle (21) eine erste Montagebohrung (4) aufweist, entlang welcher die wenigstens eine erste Gehäuseverbindungsschraube (2) durch das erste Gehäuseteil (11) geführt und in das weitere Gehäuseteil (12) mit ihrem Gewinde einschraubbar ist,
d. wobei das erste Gehäuseteil (11) an der wenigstens einen ersten Schraubverbindungsstelle (21) eine Befestigungsmontagebohrung (5) aufweist, um mit einer ersten Montageschraube (30) das Sensorgehäuse (1), insbesondere das erste Gehäuseteil (11) mit einer Anlagefläche (10) an einer Befestigungsfläche (101) eines vorbestimmten Befestigungsortes zu befestigen, wobei die erste Montagebohrung (4) und die Befestigungsmontagebohrung (5) entlang einer gemeinsamen Längsachse (A) angeordnet sind und wobei die Befestigungsmontagebohrung (5) einen Durchmesser aufweist, der größer ist als der Durchmesser der ersten Montagebohrung (4).

2. Sensorgehäuse (1) nach einem der vorhergehenden Ansprüche, wobei eines der Gehäuseteile (11, 12) an einer Domverbindungsstelle wenigstens einen Dom (6) aufweist, und wobei das andere Gehäuseteil (12, 11) eine an den Dom (6) angepasste Aussparung (62) aufweist, so dass in dem Zustand, in dem das weitere Gehäuseteil (12) das erste Gehäuseteil (11) abdeckt, der Dom (6) formschlüssig in der Aussparung (62) angeordnet ist.

3. Sensorgehäuse (1) nach einem der vorhergehenden Ansprüche, wobei das weitere Gehäuseteil (12) den wenigstens einen Dom (6) aufweist, und wobei das erste Gehäuseteil (11) die an den wenigstens einen Dom (6) angepasste Aussparung (62) aufweist, so dass in dem Zustand, in dem das weitere Gehäuseteil (12) das erste Gehäuseteil (11) abdeckt, der wenigstens eine Dom (6) formschlüssig in der Aussparung (62) angeordnet ist.

4. Sensorgehäuse (1) nach einem der vorhergehenden Ansprüche, wobei der wenigstens eine Dom (6) als Schraubdom (63) mit einer Längsachse (A) und einer Dom-Montagebohrung (61) ausgebildet ist, entlang welcher eine weitere Gehäuseverbindungsschraube (3) mit ihrem Gewinde in den Schraubdom (63) einschraubbar ist.

5. Sensorgehäuse (1) nach einem der vorhergehenden Ansprüche, wobei das erste Gehäuseteil (11) mit dem weiteren Gehäuseteil (12) in einem Zustand, in dem das weitere Gehäuseteil (12) das erste Gehäuseteil (11) abdeckt, mittels einer weiteren Gehäuseverbindungsschraube (2) an wenigstens einer weiteren Schraubverbindungsstelle (21) miteinander verschraubbar ist, und wobei die weitere Schraubverbindungsstelle (21) keinen Schraubdom (6) aufweist.

6. Sensorgehäuse (1) nach einem der vorhergehenden Ansprüche wobei das erste Gehäuseteil (11) an der ersten Schraubverbindungsstelle (21) und/oder der weiteren Schraubverbindungsstelle (31) eine erste Montagebohrung (4) aufweist und das weitere Gehäuseteil (12) an der ersten Schraubverbindungsstelle (21) und/oder der weiteren Schraubverbindungsstelle (31) eine weitere Montagebohrung (41) aufweist, entlang welcher die wenigstens eine erste Gehäuseverbindungsschraube (2) durch das erste Gehäuseteil (11) geführt und in das weitere Gehäuseteil (12) mit ihrem Gewinde einschraubbar ist.

7. Sensorgehäuse (1) nach einem der vorhergehenden Ansprüche wobei das erste Gehäuseteil (11) hergestellt ist aus Metall, insbesondere aus Aluminium, bevorzugt einem Aluminium-Druckguss, und/oder das weitere Gehäuseteil (12) hergestellt ist aus Kunststoff, bevorzugt einem Kunststoff-Spritzguss, weiter bevorzugt, einem Kunststoff-Spritzguss ausgewählt aus der Gruppe umfassend Polycarbonat (PC) und/oder Acrylnitril-Butadien-Styrol (ABS).

8. Sensorgehäuse (1) nach einem der vorhergehenden Ansprüche wobei an dem weiteren Gehäuseteil (12), bevorzugt an einer Sichtfläche (8) des Sensorgehäuses (1), weiter bevorzugt einem Randbereich (9) des weiteren Gehäuseteils (12) umlaufend oder abschnittsweise, bevorzugt an wenigstens einer Ecke (14) des weiteren Gehäuseteils (12) , ein Lichtleiter angeordnet und/oder anordenbar ist.

9. Sensorgehäuse (1) nach einem der vorherigen Ansprüche, wobei das erste Gehäuseteil (12) eine Anlagefläche (10) aufweist, die ausgebildet ist zur flächigen Montage des Sensorgehäuses (1) an einer Befestigungsfläche (101) und wobei eine Fügefläche (20) des ersten Gehäuseteils (11) und des weiteren Gehäuseteils (12) gegenüber der Anlagefläche (10) geneigt ausgebildet ist.

10. Sensorgehäuse (1) nach einem der vorherigen Ansprüche, wobei die erste Montagebohrung (4) gegenüber der Befestigungsmontagebohrung (5) derart angeordnet ist, dass innerhalb der Befestigungsmontagebohrung (5) eine Anschlagsfläche (42) für die erste und/oder weitere Gehäuseverbindungsschraube (2, 3) ausgebildet ist.

11. Sensorgehäuse (1) nach einem der vorherigen Ansprüche, wobei eine erste Anschlagsfläche (42) einer ersten Schraubverbindungsstelle (21) und eine weitere Anschlagsfläche (42) einer weiteren Schraubverbindungsstelle (31) in einer Ebene (B) angeordnet sind, die parallel zu der Anlagefläche (10) ausgerichtet ist

12. Sensor, insbesondere optischer Sensor oder Positioniersensor, mit einem Sensorgehäuse (1) nach einem der vorhergehenden Ansprüche.

13. Verfahren zum Herstellen eines Sensors, umfassend wenigstens die folgenden Schritte.
a. Bereitstellen eines ersten Gehäuseteils (11) und eines weiteren Gehäuseteils (12) eines Sensorgehäuses (1),
b. Anordnen von Sensorik- und/oder Elektronik-komponenten innerhalb des ersten Gehäuseteils (11) und/oder des weiteren Gehäuseteils (12)
c. Auflegen des weiteren Gehäuseteils (12) auf das erste Gehäuseteil (11),
d. Eindrehen einer ersten Gehäuseverbindungsschraube (2) und ggf. einer weiteren Gehäuseverbindungsschraube (3),
wobei das Sensorgehäuse (1) ein Sensorgehäuse (1) nach einem der Ansprüche 1 bis 11 ist.

14. Montageverfahren zum Montieren eines Sensorgehäuses (1) für einen Sensor nach Anspruch 12 an einer Befestigungsfläche (101) umfassend wenigstens die folgenden Schritte.
a. Bereitstellen eines Sensors mit einem Sensorgehäuse (1) nach einem der Ansprüche 1 bis 11;
b. Anlegen des Sensorgehäuses (1), insbesondere einer Anlagefläche (10) des ersten Gehäuseteils (11), an einer Befestigungsfläche (101) eines vorbestimmten Befestigungsortes;
c. Verschrauben des Sensorgehäuses (1) mit der Befestigungsfläche (101) mittels einer Montageschraube (30) in einer Befestigungsmontagebohrung (5) des Sensorgehäuses (1).

15. Positioniergerät und/oder optisches Sensorgerät, insbesondere ausgewählt aus der Gruppe umfassend Barcodelesegerät, Positioniergerät für fahrerloses Transportsysteme (AGV), Codebandsensor, Schienenpositioniergerät, Lochfinder (PHA), ein CleverReader, Time-of-Flight Sensor, Stereo-Sensor, Eventkamera, Positioniergerät und/oder Positioniergerät und/oder optisches Sensorgerät zur Merkmalsanalyse und/oder Bildauswertung, Laserlichtschnittsensor, Positioniergerät und/oder optisches Sensorgerät zur Positionierung und Führung von Objekten, Positioniergerät und/oder optisches Sensorgerät zur Detektion und Abgleich von Merkmalen, Positioniergerät und/oder Positioniergerät und/oder optisches Sensorgerät zur optischen Vermessung, Positioniergerät und/oder Positioniergerät und/oder optisches Sensorgerät zur Texterkennung (OCR) und Positioniergerät und/oder Positioniergerät und/oder optisches Sensorgerät zum Lesen von 1-D- und 2-D-Codes, umfassend ein Sensorgehäuse nach Ansprüchen 1 bis 11 und/oder einen Sensor nach Anspruch 12.
